Europäisches Patentamt

European Patent Office

Office européen des brevets

(11) Publication number: **0 372 227**
**A2**

## (12) EUROPEAN PATENT APPLICATION

(21) Application number: 89120434.9

(22) Date of filing: 04.11.89

(51) Int. Cl.5: **C08L 67/02, C08K 3/22,**
**//(C08L67/02,63:02,67:04)**

(30) Priority: 06.12.88 GB 8828469

(43) Date of publication of application:
**13.06.90 Bulletin 90/24**

(84) Designated Contracting States:
**AT BE CH DE ES FR IT LI NL**

(71) Applicant: **BIP CHEMICALS LIMITED**
**20 St. Mary's Parsonage**
**Manchester M3 2NL(GB)**

(72) Inventor: **Richard Stuart, Williams**
**16 Browning Road**
**Rugby Warwickshire CV21 4BT(GB)**

(74) Representative: **Newman, Dennis Daniel**
**Ernest et al**
**Bowdon House Ashburton Road West**
**Trafford Park**
**Manchester M17 1RA(GB)**

(54) **Thermoplastic moulding compositions.**

(57) A thermoplastic moulding composition based on polybutyleneterephthalate without either fibrous or non-fibrous filler and containing as fire retardant a thermoplastic epoxy resin having repeated bromoaryl units includes a polycaprolactone in a proportion effective to reduce brittleness of an article moulded from the composition.

EP 0 372 227 A2

**Thermoplastic moulding compositions**

This invention relates to thermoplastic moulding compositions, and more particularly to those compositions which are based on polybuteleneterephthalate (PBT) and are free from both fibrous and non-fibrous fillers (such as glass fibre and talc).

The invention has as its object the provision of a composition based on such unfilled PBT, from which articles can be moulded having useful flame retardance combined with an acceptable degree of brittleness.

Articles of unfilled PBT can be made flame-retardant by incorporating a brominated aromatic compound in the thermoplastic moulding composition from which they are formed. With this aromatic compound there is usually employed an antimony compound as flame-retardant synergist, particularly antimony trioxide ($Sb_2O_3$) or a salt thereof, such as sodium antimonate. However, the inclusion of the brominated aromatic compound leads to a marked decrease in the impact resistance of the moulded article, as shown by the following results obtained in Charpy unnotched impact tests using formulations based on commercially available fire retardants:

| Formulation, parts by weight | | | |
| --- | --- | --- | --- |
| PBT | 20 | 16 | 16 |
| Poly(pentabromobenzyl acrylate) M.Wt 80,000 | - | 3 | - |
| * Thermoplastic epoxy resin having repeated bromoaryl units | - | - | 3 |
| $Sb_2O_3$ | - | 1 | 1 |
| Self-extinguishing flammability grade (UL-94) | - | Vo | Vo |
| Flexural strength (MPa) | 68 | 73 | 87 |
| Flexural modulus (GPa) | 2.6 | 2.5 | 2.8 |
| % "No breaks" in Charpy test | 100 | 0 | 40 |

\* F2400 of Makhteshim Ltd. M.Wt 40,000; % Br 53-54; melting range 150-5°C; brominated epoxy resin derived from tetrabromobisphenol A.

We have now found that the inclusion of a polycaprolactone in unfilled PBT moulding compositions containing a fire retardant of the brominated epoxy resin type (but not of the poly pentabromobenzylacrylate or similar type) leads to a marked reduction in the brittleness of an article moulded from the composition. Thus:

| Formulation, parts by weight | Example 1 | Example 2 |
| --- | --- | --- |
| PBT | 15 | 15 |
| Poly (pentabromobenzyl acrylate) | 3 | - |
| Thermoplastic epoxy resin (F2400 as before) having repeated bromoaryl units | - | 3 |
| $Sb_2O_3$ | 1 | 1 |
| Polycaprolactone M.Wt 50,000 | 1 | 1 |
| Self-extinguishing flammability grade (UL-94) | Vo | Vo |
| Flexural strength (MPa) | 64 | 76 |
| Flexural modulus (GPa) | 1.8 | 2.4 |
| % "No breaks" in Charpy test | 0 | 80 |

In preparing these articles, as in the preparation of those described earlier, the PBT was dried to low moisture content, and moulding compositions were made from the mixed ingredients by melt-processing in a twin screw extruder (Baker Perkins 30mm; process temperature 250°C). The extrudate was reduced to granular form, and the granules were dried to below 0.02% moisture content and then injection moulded.

Preferably, the molecular weight of the polycaprolactone employed is in the range 10,000 - 200,000, particularly 20,000 - 100,000.

Preferred % weight ranges of the various ingredients are:

2

| Polycaprolactone | 2-20%, particularly 2-15% |
|---|---|
| Polybromo epoxy resin fire retardant | 5-20%, particularly 10-20% |
| Antimony compound flame-retardant synergist (if present) | 2-7% |
| Polybutylene terephthalate | Balance |

As already indicated, the invention gives particularly good results when applied to compositions in which the thermoplastic epoxy resin included as fire retardant is one in which the repeated bromoaryl units are derived from tetrabromobisphenol A ie. are of the formula $(OC_6H_2Br_2C(CH_3)_2C_6H_2Br_2OCH_2CH(OH)-CH_2)n$

In the compound F2400 of Example 2, n is such (about 68) as to give a molecular weight of 40,000; and n is in fact preferably in the range 35-70.

**Claims**

1. Thermoplastic moulding composition comprising unfilled polybutyleneterephthalate and as fire-retardant a thermoplastic epoxy resin having repeated bromoaryl units, characterised in that the composition includes a polycaprolactone in a proportion effective to reduce brittleness.

2. Thermoplastic moulding composition according to claim 1, in which the polycaprolactone has a molecular weight in the range 10,000-200,000.

3. Thermoplastic moulding composition according to claim 1, in which the polycaprolactone has a molecular weight in the range 20,000-100,000.

4. Thermoplastic moulding composition according to any of claims 1 to 3, in which an antimony compound is included as synergist for the thermoplastic epoxy resin fire retardant.

5. Thermoplastic moulding composition according to any of claims 1 to 4, in which the weight proportions of the various ingredients are:

| Polycaprolactone | 2-20% |
|---|---|
| Polybromo epoxy resin fire retardant | 5-20% |
| Antimony compound synergist (if present) | 2-7% |
| Polybutyleneterephthalate | Balance |

6. Thermoplastic moulding composition according to any of claims 1 to 5, in which the repeated bromoaryl units of the thermoplastic epoxy resin are derived from tetrabromobisphenol A.

7. A moulded article formed from the composition of any preceding claim.